# EUROPÄISCHE PATENTSCHRIFT

(11) **EP 2 698 290 B1**
(45) Veröffentlichungstag und Bekanntmachung des Hinweises auf die Patenterteilung: **04.11.2015**
(21) Anmeldenummer: 13180331.4
(22) Anmeldetag: 14.08.2013
(51) Int. Cl.: B60R 25/10, B60R 25/102, G08B 13/18

(54) **Vorrichtung und System zum Überwachen eines Fahrzeugs**
Device and method for monitoring a vehicle
Dispositif et système destinés à la surveillance d'un véhicule

(30) Priorität: 16.08.2012 DE 102012214583
(43) Veröffentlichungstag der Anmeldung: 19.02.2014
(73) Patentinhaber: Atral-Secal GmbH, 66131 Saarbrücken (DE)
(72) Erfinder: Hentschel, Manfred, 65462 Ginsheim (DE); Kroh, Christoph, 65510 Idstein (DE); Redlich, Frank, 65375 Oestrich-Winkel (DE); Schaaf, Norbert, 65343 Eltville (DE); Viertel, Tobias, 65191 Wiesbaden (DE)
(74) Vertreter: Fuchs Patentanwälte Partnerschaft mbB

(56) Entgegenhaltungen:
- EP-A2- 1 513 123
- EP-A2- 1 724 139
- EP-A2- 1 862 980
- WO-A1-94/22118
- WO-A1-2005/082687
- DE-A1-102006 047 390
- DE-U1- 29 505 867
- US-A1- 2004 075 539
- US-A1- 2006 267 742
- US-A1- 2007 200 688

## Beschreibung

Die vorliegende Erfindung betrifft ein System zum Überwachen eines Fahrzeugs. Insbesondere in Autohäusern und Werkstätten werden Fahrzeuge im freien Gelände, beispielsweise im Hof des Autohauses, abgestellt, da im Inneren der Autohäuser und der Werkstätten nicht genügend Platz ist, um eine Vielzahl von Fahrzeugen unterzubringen. Insbesondere bei Autohäusern handelt es sich häufig um wertvolle Neufahrzeuge. Auf Grund der zunehmenden Diebstähle, die entweder das gesamte Fahrzeug betreffen oder auch nur Teile davon, wie z. B. Felgen, Reifen oder nach Einbruch in das jeweilige Fahrzeug auch die Navigationssysteme oder Airbagsensoren, können diese Fahrzeuge nur gegen eine sehr hohe Versicherungsprämie versichert werden. Als Folge der hohen Versicherungsprämien werden solche Fahrzeuge teilweise gar nicht versichert.

Um die Diebstähle zu verhindern oder zumindest zu erschweren, werden Fahrzeuge mit verschiedenartigen Alarmanlagen ausgestattet. Ein bekanntes Beispiel hierfür ist die Wegfahrsperre, die nur bei einer ordnungsgemäßen Entriegelung des Fahrzeugs aufgehoben werden kann. Weitere Maßnahmen, die den Diebstahl von Fahrzeugen verhindern oder zumindest erschweren sollen, sind aus der DE 10 2006 047 390 zu entnehmen. Bei diesen Lösungen handelt es sich aber um Einzellösungen, die nur ein örtlich begrenztes Alarmsignal, beispielsweise in optischer oder akustischer Form, ausgeben.

Folglich muss ein Passant in der Nähe sein, um dieses Alarmsignal registrieren und entsprechend reagieren zu können. Da aber Autohäuser und Werkstätten häufig in Industriegebieten liegen, die nachts kaum frequentiert sind, ist die Wahrscheinlichkeit gering, dass ein Passant das Alarmsignal registriert. Selbst wenn dies der Fall sein sollte, muss der Passant in der Lage sein, die zuständige Stelle zu informieren, die Gegenmaßnahmen einleiten kann. Hierbei geht wertvolle Zeit verloren, so dass der Diebstahl in vielen Fällen nicht mehr verhindert und die Diebe nicht gefasst werden können.

Die GB 2 319 873 A offenbart eine Vorrichtung, mit welcher erkannt werden kann, ob ein Parkplatz von einem Fahrzeug belegt ist oder nicht und ob das Fahrzeug, welches auf dem Parkplatz steht, hierzu autorisiert ist. Ist das Fahrzeug nicht autorisiert, auf dem Parkplatz zu parken, wird ein entsprechendes Hinweissignal an eine Überwachungsstelle übermittelt. Diese Vorrichtung ist aber nicht in der Lage zu erkennen, ob in das betreffende Fahrzeug eingebrochen werden soll.

Die EP 0 839 699 A1 beschreibt ein Diebstahlüberwachungssystem für ein abgestelltes Fahrzeug, bei dem ein in der Umgebung des Fahrzeugs montierter Ultraschallsensor Lageänderungen des Fahrzeugs erkennt. Erkannte Lageänderungen des Fahrzeugs werden an eine Überwachungsstelle übermittelt, die darüber informiert ist, ob die Lageänderung zulässig ist oder nicht. Für den Fall, dass die Lageänderung unzulässig ist, wird ein Alarmsignal ausgegeben.

Die DE 295 05 867 U1 beschreibt eine Vorrichtung, welche mit Hilfe eines Ultraschallsensors eine Lageänderung eines Fahrzeugs erkennt.

Die DE 101 59 006 A1 offenbart ein System, welches Fotoapparate oder Videokameras umfasst, die von einem Sensor ausgelöst werden, der beispielsweise auf Bewegungen reagiert. Dieses System dient in erster Linie der Dokumentation von Fahrzeugbeschädigungen in Folge von Auffahrunfällen, Berührungen mit Einkaufswagen oder von mutwilligen Beschädigungen durch Zerkratzen der Fahrzeuglackierung unter Verwendung von Schlüsseln oder anderen spitzen Gegenständen.

Die DE 10 2009 042 871 A1 beschreibt einen Neigungssensor, der mit einer Leuchtweitenregulierung verbunden ist. Der Neigungssensor misst während der Fahrt regelmäßig die Neigung des Fahrzeugs und passt die Leuchtweitenregulierung entsprechend an, wenn sich die Neigung ändert, beispielsweise durch ein- oder aussteigende Passagiere. Registriert der Neigungssensor jedoch eine Änderung bei Stillstand des Fahrzeugs, gibt der Neigungssensor einen Hinweis an eine dann scharfgeschaltete Diebstahlwarnanlage, die infolgedessen ein Alarmsignal aussendet.

Die WO 2005/082 687 A1 offenbart eine Vorrichtung zum Überwachen eines Fahrzeugs, umfassend eine Lagebestimmungseinheit zum Erfassen von Lageänderungen des Fahrzeugs. Ferner weist die Vorrichtung einen oder mehrere Ultraschall-Transceiver zum Aussenden und Empfangen von Ultraschallwellen, um Laufzeitänderungen der Ultraschallwellen zu ermitteln. Zudem ist eine Steuerungseinheit vorgesehen, welche die von der Lagebestimmungseinheit und vom Ultraschallsensor erzeugten Signale auswertet und Hinweissignale in Abhängigkeit der ermittelten Lageänderung und/oder der Laufzeitänderung erzeugt. Darüber hinaus ist eine Übertragungseinheit vorhanden, mit der die von der Steuerungseinheit erzeugten Hinweissignale an eine Überwachungsstelle übertragbar sind. Die Vorrichtung ist fest im zu überwachenden Fahrzeug installiert.

Die WO 94/221 118 A1 zeigt ein Sicherheitssystem, bei dem eine tragbare Alarmeinheit drahtlos mit einer Überwachungseinheit verbunden ist. Die Überwachungseinheit wird beispielsweise in der Wohnung von älteren Leuten aufgestellt, wohingegen die Alarmeinheit bei Nachbarn oder anderen für die älteren Leute verantwortlichen Personen hinterlegt wird. Hierbei geht es in erster Linie darum, dass die älteren Leute in einer Gefahrensituation, beispielsweise bei Einbrüchen oder bei gesundheitlichen Problemen, einen Knopf auf der Überwachungseinheit drücken können, wodurch ein entsprechender Alarm in der Alarmeinheit angezeigt wird und die verantwortlichen Personen Gegenmaßnahmen einleiten können. Zwar können auch Fahrzeuge überwacht werden, allerdings kann nur die An- oder Abwesenheit eines Fahrzeugs detektiert werden. Lagebestimmungseinheiten und Ultraschalltransceiver werden nicht erwähnt. Die in der WO 94/221 118 A1 gezeigte Vorrichtung soll im Rahmen einer Nachbarschaftshilfe ("*Neighbourhood Watch*") und gerade nicht mit der örtlichen Polizeidienststelle eingesetzt werden, da eine schnelle Reaktion auf eine Gefahrensituation sichergestellt werden soll, welche die Polizei abhängig von der eigenen Arbeitsbelastung und den Verkehrsbedingungen nicht immer bereitstellen kann.

Die EP 1 513 123 A2 zeigt in erster Linie ein Alarmsystem zum Überwachen eines Hauses, in das aber auch ein Fahrzeug integriert werden kann. Das zu überwachende Fahrzeug ist aber genau das Fahrzeug, welches üblicherweise am überwachten Haus oder in einer zum überwachten Haus gehörenden Garage geparkt ist, also das Fahrzeug des Hausbewohners. Um das Fahrzeug in das Alarmsystem integrieren zu können, muss es mit einem "*Tag*" versehen werden. Insofern werden nur ganz bestimmte Fahrzeuge überwacht. Der Aspekt der temporären Überwachung, wie er auf dem Gelände von Autohäusern und Werkstätten relevant ist, wo die zu überwachenden Fahrzeuge nur eine relativ kurze Zeit abgestellt sind, wird in der EP 1 513 123 A2 nicht erwähnt.

Die EP 1 862 980 A2 ist auf ein Überwachungssystem gerichtet, mit dem ein bestimmtes Gebiet überwacht werden kann, wobei auch Fahrzeuge in das Überwachungssystem eingebunden werden können. Auch die EP 1 862 980 A2 offenbart den Aspekt der temporären Überwachung, wie er auf dem Gelände von Autohäusern und Werkstätten relevant ist, wo die zu überwachenden Fahrzeuge nur eine relativ kurze Zeit abgestellt sind, nicht.

Die US 2007/200 688 A1 ist auf ein Überwachungssystem für Fahrzeuge gerichtet, bei dem Fahrzeuge innerhalb eines bestimmten Bereichs überwacht werden können. Auch die US 2007/200 688 A1 offenbart den Aspekt der temporären Überwachung, wie er auf dem Gelände von Autohäusern und Werkstätten relevant ist, wo die zu überwachenden Fahrzeuge nur eine relativ kurze Zeit abgestellt sind, nicht.

Die US 2006/0167742 A1 offenbart ein Lenkradschloss, welches mit mehreren Sensoren ausgestattet ist, die einen Einbruch in ein Fahrzeug erkennen können. Das Lenkradschloss kann im Falle eines erkannten Einbruchs ein optisches oder akustisches Signal erzeugen oder ein auf den Einbruch hinweisendes Signal drahtlos übertragen. Das Lenkradschloss kann nicht von einer Überwachungsstelle ferngesteuert aktiviert oder deaktiviert werden.

Aufgabe der vorliegenden Erfindung ist es daher, ein System und ein Verfahren zu schaffen, welche den Versuch eines Diebstahls eines auf einem Gelände abgestellten Fahrzeugs oder von Teilen des Fahrzeugs bereits im Ansatz sicher feststellen und eine Überwachungsstelle rechtzeitig informieren können, wobei das System und das Verfahren einfach einzurichten und einzusetzen sein sollen.

Gelöst wird die Aufgabe mit einem System zum Überwachen eines Fahrzeugs, wobei das System eine Vorrichtung zum Überwachen des Fahrzeugs, eine Überwachungsstelle, welche die von der Vorrichtung übertragenen Hinweissignale empfangen und Befehlssignale an die Vorrichtung ausstellen kann, und eine Weiterleitungseinheit zum Weiterleiten der von der Vorrichtung erzeugten Hinweissignale aufweist. Die Vorrichtung umfasst eine Lagebestimmungseinheit zum Erfassen von Lageänderungen des Fahrzeugs und zum Erzeugen von entsprechenden Signalen, einen oder mehrere Ultraschalltransceiver zum Aussenden und Empfangen von Ultraschallwellen, um Laufzeitänderungen der Ultraschallwellen zu ermitteln, und zum Erzeugen von entsprechenden Signalen, eine Steuerungseinheit, welche die von der Lagebestimmungseinheit und vom Ultraschallsensor erzeugten Signale auswertet und Hinweissignale in Abhängigkeit der ermittelten Lageänderung und/oder der Laufzeitänderung erzeugt, eine Übertragungseinheit, mit der die von der Steuerungseinheit erzeugten Hinweissignale an eine Überwachungsstelle übertragbar sind und die von der Überwachungsstelle ausgestellte Befehlssignale empfangen kann, und eine Energiequelle zum Betreiben der Lagebestimmungseinheit, des Ultraschalltransceivers, der Steuerungseinheit und der Übertragungseinheit, wobei die Vorrichtung tragbar ausgestaltet und in das Fahrzeug einbringbar ist.

Unter Lageänderung soll in diesem Zusammenhang jede Positionsänderung des Fahrzeugs infolge einer beliebigen Bewegung verstanden werden, beispielsweise durch Kippen, Ziehen oder Schieben. Beim Versuch eines Diebstahls wird die Lage des Fahrzeugs beispielsweise dadurch geändert, dass das Fahrzeug angehoben wird, um es auf einen Transporter zu verladen. Sollten die Diebe versuchen, in den Innenraum des Fahrzeugs einzudringen, wird sich ebenfalls die Lage des Fahrzeugs durch das Gewicht der Diebe ändern. Die Änderung der Lage wird von der Lagebestimmungseinheit erfasst, der entsprechende Signale an die Steuerungseinheit übermittelt.

Die Laufzeitänderung ermittelt der Ultraschalltransceiver vorzugsweise auf folgende Weise: Zunächst wird die Vorrichtung in das zu überwachende Fahrzeug eingebracht, sämtliche Fahrzeugtüren geschlossen und das Fahrzeug verriegelt. Anschließend wird die Vorrichtung aktiviert, wie im Folgenden noch näher erläutert wird. Nun führt der Ultraschalltransceiver eine Laufzeitmessung durch. Der Ultraschalltransceiver weist einen Sender zum Aussenden und einen Empfänger zum Empfangen der ausgesendeten Ultraschallwellen auf. Der Ultraschalltransceiver sendet Ultraschallwellen aus, die beispielsweise von den Fahrzeugtüren oder -scheiben reflektiert werden. Der Ultraschalltransceiver misst die Zeit, die diese Signale benötigen, um vom Empfänger des Ultraschalltransceivers empfangen zu werden. Da jedes Fahrzeug etwas anders aufgebaut ist, dient die erste oder die ersten Laufzeitmessungen nach Aktivierung der Vorrichtung als Kalibrierung der Vorrichtung. In regelmäßigen Abständen wird die Laufzeitmessung wiederholt.

Insbesondere dann, wenn nicht das gesamte Fahrzeug entwendet werden soll, sondern nur im oder am Auto befindliche Gegenstände wie Airbagsensoren, Radios oder Navigationssysteme, ist es bei einem entsprechenden Vorgehen möglich, dass die Lagebestimmungseinheit nicht anspricht, insbesondere dann, wenn eine Fahrzeugtür geöffnet wird. Wird die Fahrzeugtür geöffnet, so ändert sich die Laufzeit des von der Fahrzeugtür reflektierten Ultraschallsignals, wodurch ein entsprechendes Signal erzeugt und an die Steuerungseinheit gesendet wird. Insofern wird mittels der Ultraschallsensoren eine effektive Innenraumüberwachung zur Verfügung gestellt.

Da die erfindungsgemäße Vorrichtung zwei ganz unterschiedliche Messprinzipien zur Überwachung des Fahrzeugs einsetzt, kann selbst dann ein versuchter Diebstahl erkannt werden, der mit herkömmlichen Alarmsystemen nicht zu detektieren ist. Ist ein Diebstahl erkannt worden, erzeugt die Steuerungseinheit ein Hinweissignal, welches mittels der Übertragungseinheit an eine Überwachungsstelle übertragbar ist. Die Überwachungsstelle ist üblicherweise im Gebäude des Autohauses oder der Werkstatt angeordnet und empfängt die Hinweissignale. Diese Übertragung geschieht ohne nennenswerten Zeitverlust, so dass die Überwachungsstelle bereits dann informiert wird, wenn der Diebstahl noch im Gange ist. Je nach Konfiguration kann die Überwachungsstelle zeitnah die gewünschten Gegenmaßnahmen einleiten, um den Diebstahl zu unterbinden. Dabei kann die Überwachungsstelle in eine Alarmanlage, die das Gebäude überwacht integriert sein.

Die Übertragungseinheit dient aber nicht nur zum Übertragen der Hinweissignale, sondern überträgt auch Befehlssignale von der Überwachungsstelle an die Vorrichtung. Beispielsweise können die Befehlssignale die Vorrichtung aktivieren oder deaktivieren. Soll in einem Autohaus eine Probefahrt mit einem der überwachten Fahrzeuge absolviert werden, kann die Vorrichtung von der Überwachungsstelle aus deaktiviert und nach Beendigung der Probefahrt wieder aktiviert werden.

Die Energieversorgung ermöglicht den Betrieb der Vorrichtung unabhängig vom Vorhandensein einer Stromquelle im überwachten Fahrzeug. Als Energieversorgung kann eine Batterie oder ein aufladbarer Akkumulator verwendet werden. Hierdurch kann die Vorrichtung ohne Weiteres von einem Fahrzeug zu einem anderen gebracht werden und ist damit fahrzeugungebunden. Dies ist insbesondere deshalb vorteilhaft, da die zu überwachenden Fahrzeuge üblicherweise nicht sehr lange auf dem Gelände des Autohauses oder der Werkstatt abgestellt sind. Ein Solarmodul kann zum Bereitstellen von elektrischer Energie verwendet werden, die im Akkumulator gespeichert werden kann. Hierdurch kann weitgehend verhindert werden, dass die erfindungsgemäße Vorrichtung infolge eines leeren Akkumulators oder einer leeren Batterie ihre Funktionstüchtigkeit verliert. Bei kritischem Ladezustand kann die Übertragungseinheit ein entsprechendes Signal an die Überwachungsstelle senden, um den Benutzer entsprechend zu informieren, dass er den Akkumulator aufladen oder die Batterie austauschen muss.

Vorzugsweise ist die Vorrichtung in das Fahrzeug einbringbar. Eine Vielzahl der aus dem Stand der Technik bekannten Vorrichtungen zum Überwachen eines Fahrzeugs ist stationär montiert, so dass das Fahrzeug erst dann überwacht werden kann, wenn es auf einem bestimmten Parkplatz abgestellt wird. Derartige Vorrichtungen sind beispielsweise in der GB 2 319 873 und der EP 0 839 699 offenbart. Diese Vorrichtungen setzen aber bauliche Maßnahmen im Umfeld des Parkplatzes voraus, beispielsweise die Montage von Sensoren am Boden oder an der Decke. Demgegenüber kann die erfindungsgemäße Vorrichtung als tragbare Einheit ausgestaltet werden, die problemlos in das zu überwachende Fahrzeug eingebracht werden kann. Bauliche Maßnahmen im Umfeld des Parkplatzes sind nicht erforderlich. Zudem ist es unerheblich, wo das zu überwachende Fahrzeug abgestellt wird. Je nachdem, ob die erfindungsgemäße Vorrichtung in das Fahrzeug eingebracht wird oder nicht, kann flexibel entschieden werden, welches Fahrzeug überwacht werden soll und welches nicht. Ferner kann hierdurch auf einfache Weise eine effektive Innenraumüberwachung des betreffenden Fahrzeugs realisiert werden. Zwar kann mit Sensoren, die im Umfeld des Parkplatzes angeordnet sind, auch ermittelt werden, ob beispielsweise eine der Fahrzeugtüren geöffnet worden ist. Allerdings kann es je nach Fahrzeugtyp Bereiche geben, die von den Sensoren nicht erfasst werden können, so dass hier ein Einbruch in das Fahrzeug nicht sicher erfasst werden kann. Mit einer Vorrichtung, die im Innenraum des Fahrzeugs positioniert ist, können Einbruchversuche besser detektiert werden.

In einer vorteilhaften Ausgestaltung des erfindungsgemäßen Systems umfasst die Übertragungseinheit ein Funktransceiver. Der Funktransceiver kann dabei so eingestellt werden, dass er Signale zwar nur über eine begrenzte Entfernung überträgt, dabei aber nur wenig Energie verbraucht. Wie eingangs erwähnt, sollen auf dem Gelände von Autohäusern und Werkstätten abgestellte Fahrzeuge und damit nur relativ kleine Bereiche mittels des erfindungsgemäßen Systems überwacht werden. Insofern überwiegen die aus dem geringen Energiebedarf resultierenden Vorteile den Nachteil der geringen, aber für den Einsatzzweck ausreichenden Reichweite, so dass das erfindungsgemäße System in dieser Ausgestaltung sehr lange betrieben werden kann, ohne dass die Energiequelle ausgewechselt oder manuell aufgeladen werden muss.

Vorzugsweise umfasst die Lagebestimmungseinheit einen Beschleunigungssensor. Der Beschleunigungssensor ist in der Lage, selbst kleinste Änderungen der Lage des Fahrzeugs, beispielsweise infolge von Erschütterungen, zu detektieren und bietet somit eine sehr sichere, zuverlässige und empfindliche Möglichkeit, Diebstähle zu erfassen.

In einer Fortbildung umfasst die Lagebestimmungseinheit einen Neigungssensor. Versucht der Dieb, Felgen zu demontieren, so muss er das Fahrzeug leicht anheben, um sie entwenden zu können. Auch wenn das Fahrzeug mittels eines Abschleppwagens entwendet werden soll, wird die Neigung des Fahrzeugs geändert. Diese versuchten Diebstähle können mit dem Neigungssensor besonders gut erfasst werden, so dass der Neigungssensor ein besonders effektives Mittel zum Erfassen von Diebstählen ist.

Weiterhin ist es von Vorteil, wenn die Lagebestimmungseinheit eine Positionsbestimmungseinrichtung umfasst. Die Positionsbestimmungseinrichtung kann beispielsweise einen Drehgeber umfassen, der selbst geringe Drehungen der Räder und somit unerlaubte Bewegungen des Fahrzeugs infolge eines versuchten Diebstahls detektieren und beispielsweise über Funk an die Positionsbestimmungseinrichtung übermitteln kann. Der Versuch eines Diebstahls kann somit bereits frühzeitig erkannt werden.

Weiterhin ist es vorteilhaft, wenn die Lagebestimmungseinheit eine Abstandsmesseinrichtung zum Bestimmen des Abstands eines wählbaren Punkts des Fahrzeugs zum Boden umfasst. Die Abstandsmesseinrichtung kann einen Abstandssensor umfassen, der an einem wählbaren Punkt des Fahrzeugs, beispielsweise am Unterboden des Fahrzeugs, einfach anbringbar ist und der beispielsweise über Funk mit der Abstandsmesseinrichtung kommuniziert. Der Unterboden ist nur schwer zugänglich, so dass der Abstandssensor von den Dieben nur schwer aufgefunden und funktionsuntauglich gemacht werden kann. Ein derartiger Abstandssensor kann aber auch bereits Teil einer bestehenden Alarmanlage sein, mit dem die Abstandsmesseinrichtung kommunizieren kann. Wird das Fahrzeug mit einem Abschleppwagen angehoben oder dringt ein Dieb in den Innenraum des Fahrzeugs ein und stützt sich im Innenraum ab, so ändert sich der Abstand des wählbaren Punkts zum Boden, auf dem das Fahrzeug steht. Insofern kann auch mittels der Abstandsmesseinrichtung der Versuch eines Diebstahls frühzeitig erkannt werden.

In einer weiteren Ausgestaltung weist die Vorrichtung einen Alarmgeber zum Ausgeben eines Alarmsignals auf. Das Alarmsignal kann optischer und/oder akustischer Natur sein. Somit wird einerseits den umgebenden Passanten ein Hinweis auf den Diebstahl gegeben, die entsprechende Maßnahmen ergreifen können, andererseits wird der psychische Druck auf den Dieb erhöht, der hierdurch den Diebstahl abbricht oder länger braucht, um ihn zu Ende zu führen. Hierdurch wird die Wahrscheinlichkeit, die Diebe zu fassen, erhöht.

Weiterhin ist es bevorzugt, wenn eine Aktivierungseinheit zum Aktivieren und Deaktivieren der Vorrichtung vorhanden ist. Die Aktivierungseinheit ist dabei vorteilhafterweise mit einem Code versehen, so dass die Diebe keine Möglichkeit haben, die Vorrichtung zu deaktivieren. Die Aktivierungseinheit hat den Vorteil, dass der befugte Benutzer die Vorrichtung im Falle eines Fehlalarms schnell unter Verwendung des Codes deaktivieren kann.

In einer bevorzugten Ausbildung weist die Vorrichtung drei Ultraschalltransceiver auf. Es hat sich herausgestellt, dass sich mit drei Ultraschalltransceivern eine besonders gute Überwachung des Fahrzeuginnenraums erreichen lässt. Dabei werden bevorzugt je ein Ultraschallsensoren auf die Fahrer- und Beifahrertüre und der dritte Ultraschallsensor in den Innenraum gerichtet. Die für die Diebe interessanten Gegenstände befinden sich überwiegend im Armaturenbrett, wie beispielsweise im Handschuhfach. Auch das Radio oder das Navigationssystem ist im Armaturenbrett verbaut. Um sich Zugang zum Armaturenbrett zu verschaffen, ist es am einfachsten, die Fahrer- oder die Beifahrertür zu öffnen oder die jeweiligen Seitenscheiben einzuschlagen. Hierdurch wird eine Laufzeitänderung der dort reflektierten Ultraschallwellen bewirkt, die vom jeweiligen Ultraschallsensor erfasst wird. Für den Fall, dass der Dieb über die Heckklappe oder über die Hintertüren in den Fahrzeuginnenraum eindringt, gelangt er nur über Umwege zum Armaturenbrett, was bereits von der Lagebestimmungseinheit erfasst wird. Sollte es dem Dieb ohne Auslösen der Lagebestimmungseinheit gelingen, in den Innenraum zu gelangen, so erzeugt schon das Eindringen seines Arms oder anderer Körperteile in den Erfassungsbereich eines der Ultraschallsensoren eine Laufzeitänderung, so dass ein entsprechendes Signal erzeugt wird. Die Ausbildung der erfindungsgemäßen Vorrichtung mit drei Ultraschallsensoren bietet daher eine ausreichende Innenraumüberwachung, ohne dass eine zu große Anzahl von Ultraschallsensoren verwendet wird, womit der Energiebedarf in akzeptablen Grenzen gehalten wird.

Vorzugsweise weist die Vorrichtung ein gekapseltes, stapelbares Gehäuse auf. Einerseits erschwert das gekapselte Gehäuse die mutwillige Zerstörung der Vorrichtung durch die Diebe mit dem Ziel, die Vorrichtung funktionsunfähig zu machen, andererseits ermöglicht es das stapelbare Gehäuse, eine Vielzahl der Vorrichtung platzsparend im Autohaus oder in der Werkstatt zu lagern, wenn sie nicht benötigt werden. Das Gehäuse kann eine Verriegelungseinrichtung umfassen, mit der die Vorrichtung lösbar beispielsweise am Lenkrad des Fahrzeugs befestigt werden kann. Zum Lösen kann ein Schlüssel oder ein Code notwendig sein, so dass die Diebe die Vorrichtung nicht aus dem Fahrzeug entfernen und zerstören können. Darüber hinaus kann das Gehäuse so ausgebildet sein, dass es in eine Ladestation passt, um die Akkumulatoren aufzuladen.

Das erfindungsgemäße System lässt sich in jedem Autohaus oder jeder Werkstatt einfach installieren und bietet somit die Möglichkeit, auf dem Gelände des Autohauses oder der Werkstatt abgestellte Fahrzeuge auf einfache und effiziente Weise zu überwachen. Mittels der Weiterleitungseinheit ist es möglich, die Hinweissignale, die von der Vorrichtung erzeugt werden, automatisiert über eine übliche Telefonleitung an eine geeignete Einrichtung weiterzuleiten, etwa an einen Sicherheitsdienst, der ohne nennenswerte Verzögerungen über den versuchten Diebstahl informiert wird und schnell zum Tatort gelangen kann, wodurch die Wahrscheinlichkeit, den Dieb zu fassen, deutlich erhöht wird. Weiterhin kann beispielsweise eine SMS oder eine Email generiert werden, mit denen die für die Sicherheit der Fahrzeuge zuständige Person über den Diebstahl informiert wird.

Vorzugsweise umfasst das System einen weiteren Alarmgeber zum Ausgeben eines Alarmsignals. Hierbei kann der weitere Alarmgeber eine Sirene sein, die am Gebäude der Werkstatt oder des Autohauses installiert ist. Da sie vom Stromnetz betrieben werden kann, kann sie deutlich stärker ausgebildet sein als der Alarmgeber, der an der Vorrichtung montiert, wodurch er für sich in der Umgebung des Tatorts aufhaltende Passanten deutlich besser wahrnehmbar ist. Weiterhin kann der weitere Alarmgeber als Flutlichtanlage ausgebildet sein, so dass das Gelände, auf dem sich das Fahrzeug befindet, bei Ansprechen der Vorrichtung hell beleuchtet werden kann. Beide Maßnahmen erhöhen den psychischen Druck auf den Dieb, so dass es einfacher wird, den Diebstahl zu unterbinden und den Dieb zu fassen.

In einer besonders vorteilhaften Ausgestaltung umfasst das erfindungsgemäße System eine Relaisstation zum Verstärken der von der Vorrichtung erzeugten Hinweissignale und der von der Überwachungsstelle ausgestellten Befehlssignale. Wie bereits erläutert, ist es zur Reduzierung des Energiebedarfs vorteilhaft, die Leistung der Übertragungseinheit der Vorrichtung so weit wie möglich zu minimieren. Um aber auch Fahrzeuge, die an weit von der Überwachungsstelle entfernten Stellen des Geländes abgestellt sind, sicher überwachen zu können, ist die Relaisstation zur Signalverstärkung vorgesehen.

Ein weiterer Aspekt der vorliegenden Erfindung betrifft ein Verfahren Verfahren zum Betreiben eines Systems nach einem der vorherigen Ansprüche, wobei das System umfasst:
- eine Vorrichtung zum Überwachen des Fahrzeugs, wobei die Vorrichtung tragbar ausgestaltet ist und eine Aktivierungseinheit zum Aktivieren und Deaktivieren der Vorrichtung aufweist,
- eine Überwachungsstelle, welche die von der Vorrichtung übertragenen Hinweissignale empfangen und Befehlssignale an die Vorrichtung ausstellen kann, und
- eine Weiterleitungseinheit zum Weiterleiten der von der Vorrichtung erzeugten Hinweissignale,
umfassend folgende Schritte:
- Einbringen der Vorrichtung in ein zu überwachendes Fahrzeug,
- Aufbauen einer Kommunikation zwischen der Vorrichtung und der Überwachungsstelle durch Empfangen von Hinweissignalen und durch Aussenden von Befehlssignalen,
- Aktivieren der Vorrichtung mittels der von der Überwachungsstelle ausgesendeten Befehlssignale,
- Überwachen des Fahrzeugs,
- Deaktivieren der Vorrichtung mittels der von der Überwachungsstelle ausgesendeten Befehlssignale,
- Verlagern der Vorrichtung in ein anderes zu überwachendes Fahrzeug.

Mit dem erfindungsgemäßen Verfahren zur Überwachung eines Fahrzeugs lassen sich dieselben Vorteile und technischen Effekte erreichen, die bereits für die verschiedenen Ausführungsbeispiele des Systems dargelegt worden sind.

Die Erfindung wird im Folgenden anhand eines bevorzugten Ausführungsbeispiels unter Bezugnahme auf die anhängenden Zeichnungen im Detail erläutert. Es zeigen
- Figur 1: den prinzipiellen Aufbau eines bevorzugten Ausführungsbeispiels einer erfindungsgemäßen Vorrichtung zum Überwachen eines Fahrzeugs, und
- Figur 2: den prinzipiellen Aufbau eines bevorzugten Ausführungsbeispiels eines erfindungsgemäßen Systems zum Überwachen eines Fahrzeugs.

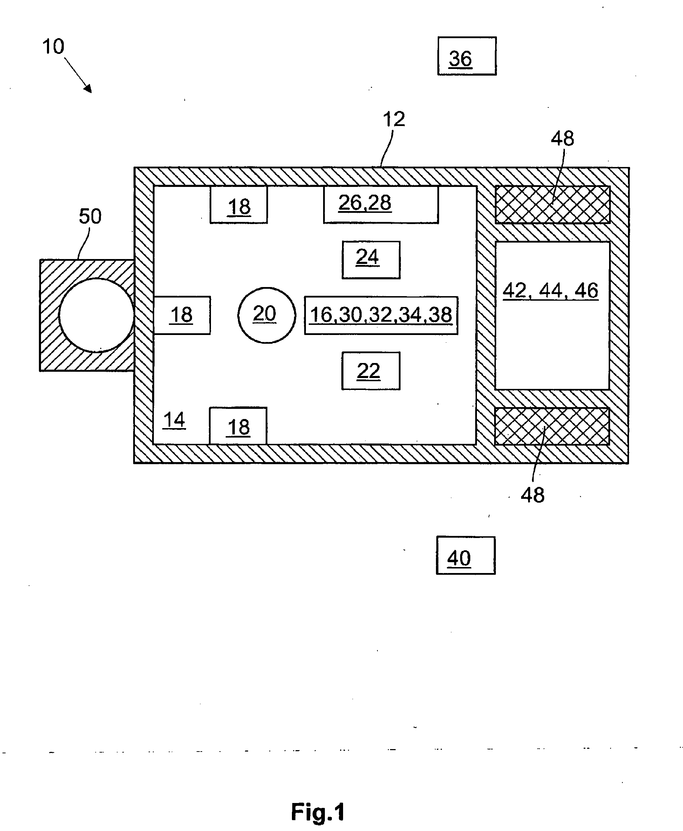

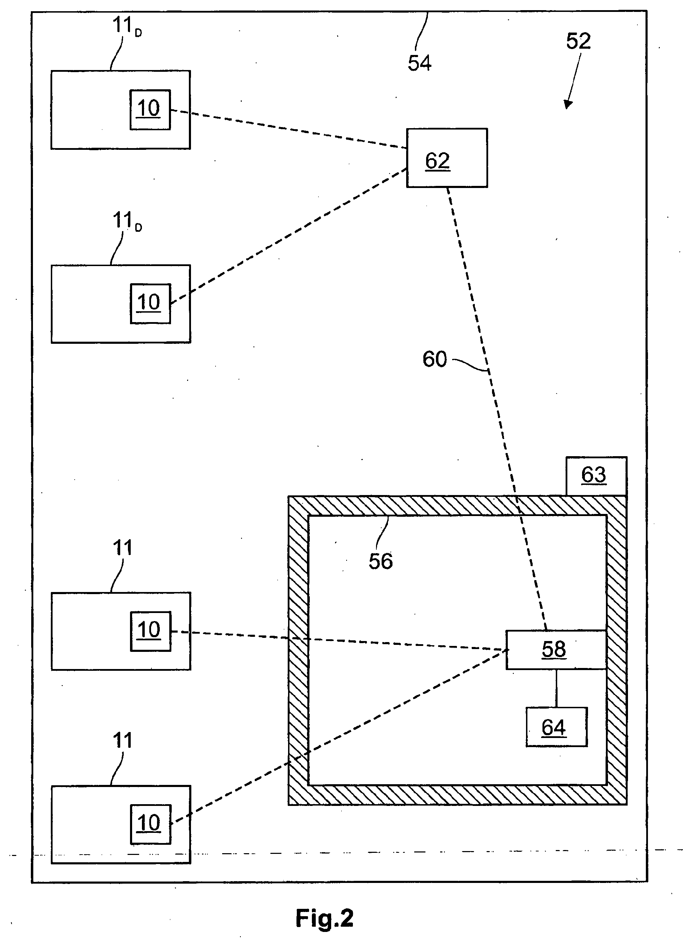

Das in Figur 1 dargestellte Ausführungsbeispiel der erfindungsgemäßen Vorrichtung 10 zur Überwachung eines Fahrzeugs 11 (vgl. Figur 2) weist ein Gehäuse 12 auf, in welchem ein Elektronikboard 14 angeordnet ist. Auf dem Elektronikboard 14 sind eine Lagebestimmungseinheit 16, drei Ultraschalltransceiver 18, ein Alarmgeber 20, eine Steuerungseinheit 22, eine Aktivierungseinheit 24 und eine Übertragungseinheit 26 angeordnet. Die Übertragungseinheit 26 weist im dargestellten Beispiel einen Funktransceiver 28 auf. Die Lagebestimmungseinheit 16 umfasst einen Beschleunigungssensor 30, einen Neigungssensor 32, eine Positionsbestimmungseinrichtung 34, die mit einem am Fahrzeug 11 anbringbaren Drehgeber 36 zusammenwirkt, sowie eine Abstandsmesseinrichtung 38, die mit einem am Fahrzeug 11 anbringbaren Abstandssensor 40 zusammenwirkt, mit denen es ermöglicht wird, selbst kleine Lageänderungen des überwachten Fahrzeugs 11 zu erkennen. Eine Energiequelle 42, vorzugsweise eine Batterie 44 oder ein Akkumulator 46, stellen die Versorgung mit elektrischer Energie sicher. Der Akkumulator 46 ist mittels eines Solarmoduls 48 aufladbar. Das Elektronikboard 14 stellt die Energieversorgung und die Kommunikation zwischen den verschiedenen Komponenten der Vorrichtung 10 sicher. Das Gehäuse 12 ist stapelbar und gekapselt und weist eine Verriegelungseinrichtung 50 auf, mit der die Vorrichtung 10 am zu überwachenden Fahrzeug 11 befestigt werden kann, beispielsweise am Lenkrad. Die Verriegelungseinrichtung 50 ist so am Gehäuse 12 angeordnet, dass einer der Ultraschalltransceiver 18 auf in den Innenraum und die anderen beiden Ultraschalltransceiver 18 auf die Fahrer- und Beifahrertüre des Fahrzeugs 11 gerichtet sind.

In Figur 2 ist ein System 52 zum Überwachen eines Fahrzeugs 11 dargestellt. Hierbei ist je eine erfindungsgemäße Vorrichtung 10 in insgesamt vier Fahrzeugen 11 angeordnet, die auf einem Gelände 54 beispielsweise eines Autohauses oder einer Werkstatt abgestellt sind. In einem Gebäude 56 ist eine Überwachungsstelle 58 eingerichtet, die mit den erfindungsgemäßen Vorrichtungen 10 über eine Übertragungsstrecke 60 kommuniziert, die durch die gestrichelten Linien dargestellt ist. Die Fahrzeuge 11_{D} sind etwas weiter weg von der Überwachungsstelle 58 positioniert als die übrigen Fahrzeuge 11, so dass die in diesen beiden Fahrzeugen 11_{D} positionierten Vorrichtungen 10 nicht direkt, sondern über eine Relaisstation 62 mit der Überwachungsstelle 58 kommunizieren, welche die Signale verstärkt.

Die Vorrichtung 10 und das System 52 werden wie folgt betrieben: Wird das zu überwachendes Fahrzeug 11 auf dem Gelände 54 des Autohauses oder der Werkstatt abgestellt, so wird eine der erfindungsgemäßen Vorrichtungen 10 in dieses Fahrzeug 11 eingebracht und mittels der Verriegelungseinrichtung 50 beispielsweise am Lenkrad befestigt. Der befugte Benutzer kann die Überwachungsstelle 58 manuell veranlassen, ein Befehlssignal an den Funktransceiver 28 und dann weiter an die Aktivierungseinheit 24 der Vorrichtung 10 zu senden, wodurch die Vorrichtung 10 scharf geschaltet wird. Die Überwachungsstelle 58 kann auch so eingerichtet sein, dass die Vorrichtung 10 zeitabhängig automatisiert aktiviert und deaktiviert wird. So kann beispielsweise eine Aktivierung kurz nach Betriebsschluss des Autohauses oder der Werkstatt und eine Deaktivierung kurz vor Betriebsbeginn des folgenden Werktages erfolgen. Wird die Vorrichtung 10 scharf geschaltet, so ermittelt der Ultraschalltransceiver 18 in regelmäßigen Abständen, beispielsweise alle 60 sec, die Laufzeiten der von ihm ausgesendeten Ultraschallwellen. Die erste, nach Aktivierung der Vorrichtung 10 gemessene Laufzeit wird als Ausgangswert verwendet, wodurch der Ultraschalltransceiver 18 kalibriert wird. Die anschließend gemessenen Laufzeiten werden mit der zuvor gemessenen Laufzeit verglichen. Wird nun versucht, dieses Fahrzeug 11 oder Teile des Fahrzeugs 11 zu entwenden, so dass entweder die Lagebestimmungseinheit 16 oder der Ultraschalltransceiver 18 oder beide Lageänderungen oder Laufzeitänderungen registrieren, senden die Lagebestimmungseinheit 16 oder der Ultraschalltransceiver 18 entsprechende Signale an die Steuerungseinheit 22 aus, welche die Signale auf Plausibilität hin überprüft, beispielsweise dahingehend, ob die registrierten Lage- und Laufzeitänderungen über einem bestimmten Schwellenwert liegen. Sollte dies der Fall sein, erzeugt die Steuerungseinheit 22 entsprechende Hinweissignale. Zusätzlich kann der Alarmgeber 20 der Vorrichtung 10 mittels der Steuerungseinheit 22 aktiviert werden. Auch kann ein weiterer Alarmgeber 63, der am Gebäude 56 des Autohauses oder der Werkstatt montiert ist, veranlasst werden. Die Überwachungsstelle 58 weist eine Weiterleitungseinheit 64 auf, von der aus die von der Vorrichtung 10 erzeugten und an die Überwachungsstelle 58 übermittelten Hinweissignale an eine dritte Stelle, beispielsweise an eine Leitstelle oder einen Sicherheitsdienst, weitergeleitet werden können, der geeignete Gegenmaßnahmen zum Unterbinden des Diebstahls oder zum Fassen der Diebe einleiten kann.

Für den Fall, dass kein Diebstahl versucht worden ist oder stattgefunden hat und das Fahrzeug 11 von einem berechtigten Benutzer, beispielsweise für eine Probefahrt, verwendet werden soll, wird von der Überwachungsstelle 58 aus ein Befehlssignal an die Vorrichtung 10 gesendet, um die Vorrichtung 10 zu deaktivieren bzw. unscharf zu schalten. Die Vorrichtung 10 kann selbst auch manuell über die Aktivierungseinheit 24 mittels einer entsprechenden Berechtigung deaktiviert werden, beispielsweise bei einem Fehlalarm. Durch Lösen der Verriegelungseinrichtung 50 kann die Vorrichtung 10 vom Fahrzeug 11, das nicht mehr überwacht werden muss, zu einem anderen Fahrzeug 11 verlagert werden, welches dann überwacht werden kann. Sollte die Vorrichtung 10 nicht benötigt werden, beispielsweise, wenn keine Fahrzeuge 11 überwacht werden sollen, kann eine Vielzahl der erfindungsgemäßen Vorrichtungen 10 gestapelt und platzsparend gelagert werden.

### Bezugszeichenliste

- 10: Vorrichtung
- 11, 11_{D}: Fahrzeug
- 12: Elektronikboard
- 14: Lagebestimmungseinheit
- 18: Ultraschalltransceiver

- 20: Alarmgeber
- 22: Steuerungseinheit
- 24: Aktivierungseinheit
- 26: Übertragungseinheit
- 28: Funktransceiver

- 30: Beschleunigungssensor
- 32: Neigungssensor
- 34: Positionsbestimmungseinrichtung
- 36: Drehgeber
- 38: Abstandsmesseinrichtung

- 40: Abstandssensor
- 42: Energiequelle
- 44: Batterie
- 46: Akkumulator
- 48: Solarmodul

- 50: Verriegelungseinrichtung
- 52: System
- 54: Gelände
- 56: Gehäuse
- 58: Überwachungsstelle

- 60: Übertragungsstrecke
- 62: Relaisstation
- 63: weiterer Alarmgeber
- 64: Weiterleitungseinheit

## Patentansprüche

1. System zum Überwachen eines Fahrzeugs (11), umfassend
- eine Vorrichtung (10) zum Überwachen des Fahrzeugs,
- eine Überwachungsstelle (58), welche die von der Vorrichtung (10) übertragenen Hinweissignale empfangen und Befehlssignale an die Vorrichtung (10) ausstellen kann, und
- eine Weiterleitungseinheit (64) zum Weiterleiten der von der Vorrichtung (10) erzeugten Hinweissignale,
wobei die Vorrichtung (10) umfasst:
- eine Lagebestimmungseinheit (16) zum Erfassen von Lageänderungen des Fahrzeugs (11) und zum Erzeugen von entsprechenden Signalen,
- einen oder mehrere Ultraschalltransceiver (18) zum Aussenden und Empfangen von Ultraschallwellen, um Laufzeitänderungen der Ultraschallwellen zu ermitteln, und zum Erzeugen von entsprechenden Signalen,
- eine Steuerungseinheit (22), welche die von der Lagebestimmungseinheit (16) und vom Ultraschalltransceiver (18) erzeugten Signale auswertet und Hinweissignale in Abhängigkeit der ermittelten Lageänderung und/oder der Laufzeitänderung erzeugt,
- eine Übertragungseinheit (26), mit der die von der Steuerungseinheit (22) erzeugten Hinweissignale an die Überwachungsstelle (58) übertragbar sind und die von der Überwachungsstelle ausgestellte Befehlssignale empfangen kann, und
- eine Energiequelle zum Betreiben der Lagebestimmungseinheit (16), des Ultraschalltransceivers (18), der Steuerungseinheit (22) und der Übertragungseinheit (26),
wobei die Vorrichtung (10) tragbar ausgestaltet und in das Fahrzeug einbringbar ist.

2. System nach einem der Anspruch 1,
**dadurch gekennzeichnet, dass** die Übertragungseinheit (26) einen Funktransceiver (28) umfasst.

3. System nach Anspruch 1 oder 2,
**dadurch gekennzeichnet, dass** die Lagebestimmungseinheit (16) einen Beschleunigungssensor (30) umfasst.

4. System nach einem der vorherigen Ansprüche,
**dadurch gekennzeichnet, dass** die Lagebestimmungseinheit (16) einen Neigungssensor (32) umfasst.

5. System nach einem der vorherigen Ansprüche,
**dadurch gekennzeichnet, dass** die Lagebestimmungseinheit (16) eine Positionsbestimmungseinrichtung (34) umfasst.

6. System nach einem der vorherigen Ansprüche,
**dadurch gekennzeichnet, dass** die Lagebestimmungseinheit (16) eine Abstandsmesseinrichtung (38) zum Bestimmen des Abstands eines wählbaren Punkts des Fahrzeugs (11) zum Boden umfasst.

7. System nach einem der vorherigen Ansprüche,
**dadurch gekennzeichnet, dass** die Vorrichtung (10) einen Alarmgeber (20) zum Ausgeben eines Alarmsignals aufweist.

8. System nach einem der vorherigen Ansprüche,
**gekennzeichnet durch** eine Aktivierungseinheit (24) zum Aktivieren und Deaktivieren der Vorrichtung (10).

9. System nach einem der vorherigen Ansprüche,
**dadurch gekennzeichnet, dass** die Vorrichtung (52) drei Ultraschalltransceiver (18) aufweist.

10. System nach einem der vorherigen Ansprüche,
**gekennzeichnet durch** ein gekapseltes, stapelbares Gehäuse (12).

11. System nach einem der vorherigen Ansprüche,
**gekennzeichnet durch** einen weiteren Alarmgeber (63) zum Ausgeben eines Alarmsignals.

12. System nach einem der vorherigen Ansprüche,
**gekennzeichnet durch** eine Relaisstation (62) zum Verstärken der von der Vorrichtung (10) erzeugten Hinweissignale und der von der Überwachungsstelle (58) ausgestellten Befehlssignale.

13. Verfahren zum Betreiben eines Systems (52) nach einem der vorherigen Ansprüche, wobei das System (52) umfasst:
- eine Vorrichtung (10) zum Überwachen des Fahrzeugs, wobei die Vorrichtung (10) tragbar ausgestaltet ist und eine Aktivierungseinheit zum Aktivieren und Deaktivieren der Vorrichtung (10) aufweist,
- eine Überwachungsstelle (58), welche die von der Vorrichtung (10) übertragenen Hinweissignale empfangen und Befehlssignale an die Vorrichtung (10) ausstellen kann, und
- eine Weiterleitungseinheit (64) zum Weiterleiten der von der Vorrichtung (10) erzeugten Hinweissignale,
umfassend folgende Schritte:
- Einbringen der Vorrichtung (10) in ein zu überwachendes Fahrzeug,
- Aufbauen einer Kommunikation zwischen der Vorrichtung (10) und der Überwachungsstelle (58) durch Empfangen von Hinweissignalen und durch Aussenden von Befehlssignalen,
- Aktivieren der Vorrichtung (10) mittels der von der Überwachungsstelle ausgesendeten Befehlssignale,
- Überwachen des Fahrzeugs,
- Deaktivieren der Vorrichtung (10) mittels der von der Überwachungsstelle ausgesendeten Befehlssignale,
- Verlagern der Vorrichtung (10) in ein anderes zu überwachendes Fahrzeug.

## Claims

1. System for monitoring a vehicle (11), comprising
- a device (10) for monitoring the vehicle (11),
- a checkpoint unit (58) that is able to receive information signals transmitted by the device and to issue instruction signals to the device,
- a forwarding unit for forwarding the information signals generated by the device,
wherein the device (10) comprises
- an orientation determination device (16) for detecting orientation changes of the vehicle (11) and for generating respective signals,
- one or more ultrasonic transceivers (18) for sending and receiving ultrasonic waves to detect running time changes and for generating respective signals,
- a control unit (22) that evaluates the signals generated by the orientation determination device (16) and the ultrasonic transceiver (18) and that generates information signals depending on the detected orientation changes and/or run time changes,
- a transmission unit (26) by which the information signals generated by the control unit (22) are transferrable to the checkpoint unit (58) and that can receive the instruction signals issued by the checkpoint unit (58), and
- an energy source (42) for running the orientation determination device (16), of the ultrasonic transceivers (18), the control unit (22) and the transmission unit (26),
wherein the device is portable and introducible into the vehicle (11).

2. System according to claim 1,
**characterized in that** the transmission unit (26) comprises a radio transceiver (28).

3. System according to one of the claims 1 or 2,
**characterized in that** the orientation determination device (16) comprises an acceleration sensor (30).

4. System according to one of the preceding claims,
**characterized in that** the orientation determination device (16) comprises an inclination sensor (32).

5. System according to one of the preceding claims,
**characterized in that** the orientation determination device (16) comprises a position determination device (34).

6. System according to one of the preceding claims,
**characterized in that** the orientation determination device (16) comprises a distance measuring device (38) for determining the distance of a selectable point of the vehicle (11) to the ground.

7. System according to one of the preceding claims,
**characterized in that** the device (10) comprises an alarm generator (20) for issuing an alarm signal.

8. System according to one of the preceding claims,
**characterized by** an activation unit (24) for activating and deactivating the device.

9. System according to one of the preceding claims,
**characterized in that** the device (10) comprises three ultrasonic transceivers (18).

10. System according to one of the preceding claims,
**characterised by** a capsule, stackable housing (56).

11. System according to one of the preceding claims,
**characterized by** a further alarm generator (63) for issuing an alarm signal.

12. System according to one of the preceding claims,
**characterized by** a relay station (62) for amplifying the information signals generated by the device (10) and the instruction signals issued by the checkpoint unit (58).

13. Method for running a system according to one of the preceding claims, wherein the system (52) comprises
- a device (10) for monitoring the vehicle (11), wherein the device (10) is portable and comprises an activation unit (24) for activating and deactivating the device (10),
- a checkpoint unit (58) that is able to receive information signals transmitted by the device (10) and to issue instruction signals to the device (10), and
- a forwarding unit (64) for forwarding the information signals generated by the device (10),
comprising following steps:
- introducing the device (10) into a vehicle (11) to be monitored,
- establishing a communication between the device (10) and the checkpoint unit (58) by receiving information signals and by sending instruction signals,
- activating the device by the instruction signals sent by the checkpoint unit (58),
- monitoring the vehicle (11),
- deactivating the device by the instruction signals sent by the checkpoint unit (58),
- relocating the device (10) into another vehicle (11) to be monitored.

## Revendications

1. Système destiné à la surveillance d'un véhicule (11), comprenant
- un dispositif (10) destiné à la surveillance du véhicule,
- un poste de surveillance (58), qui peut recevoir les signaux d'avertissement transmis par le dispositif (10) et délivrer des signaux de commande au dispositif (10), et
- une unité de réacheminement (64) pour réacheminer les signaux d'avertissement produits par le dispositif (10),
sachant que le dispositif (10) comprend :
- une unité (16) de détermination de position, pour détecter des modifications de position du véhicule (11) et pour produire des signaux correspondants,
- un ou plusieurs émetteurs-récepteurs (18) à ultrasons, pour émettre et recevoir des ondes ultrasonores afin de déterminer des modifications de temps de propagation des ondes ultrasonores, et pour produire des signaux correspondants,
- une unité de commande (22), qui évalue les signaux produits par l'unité (16) de détermination de position et par l'émetteur-récepteur (18) à ultrasons et qui produit des signaux d'avertissement en fonction de la modification du temps de propagation et/ou de la modification de position déterminée,
- une unité de transmission (26), avec laquelle les signaux d'avertissement produits par l'unité de commande (22) peuvent être transmis à la poste de surveillance (58), et qui peut recevoir les signaux de commande délivrés par le poste de surveillance, et
- une source d'énergie pour faire fonctionner l'unité (16) de détermination de position, l'émetteur-récepteur (18) à ultrasons, l'unité de commande (22) et l'unité de transmission (26),
sachant que le dispositif (10) est conçu portatif et peut être introduit dans le véhicule.

2. Système selon la revendication 1, **caractérisé en ce que** l'unité de transmission (26) comprend un émetteur-récepteur radio (28).

3. Système selon la revendication 1 ou 2, **caractérisé en ce que** l'unité (16) de détermination de position comprend un capteur d'accélération (30).

4. Système selon l'une des revendications précédentes, **caractérisé en ce que** l'unité (16) de détermination de position comprend un capteur d'inclinaison (32).

5. Système selon l'une des revendications précédentes, **caractérisé en ce que** l'unité (16) de détermination de position comprend un dispositif (34) de détermination de position.

6. Système selon l'une des revendications précédentes, **caractérisé en ce que** l'unité (16) de détermination de position comprend un dispositif (38) de mesure de distance pour déterminer la distance d'un point sélectionnable du véhicule (11) par rapport au sol.

7. Système selon l'une des revendications précédentes, **caractérisé en ce que** le dispositif (10) présente un émetteur d'alarme (20) pour délivrer un signal d'alarme.

8. Système selon l'une des revendications précédentes, **caractérisé par** une unité d'activation (24) pour activer et désactiver le dispositif (10).

9. Système selon l'une des revendications précédentes, **caractérisé en ce que** le dispositif (10) présente trois émetteurs-récepteurs (18) à ultrasons.

10. Système selon l'une des revendications précédentes, **caractérisé par** un boîtier blindé (12) empilable.

11. Système selon l'une des revendications précédentes, **caractérisé par** un émetteur d'alarme supplémentaire (63) pour délivrer un signal d'alarme.

12. Système selon l'une des revendications précédentes, **caractérisé par** un poste de relais (62) pour amplifier les signaux d'avertissement produits par le dispositif (10) et les signaux de commande délivrés par le poste de surveillance (58).

13. Procédé d'exploitation d'un système selon l'une des revendications précédentes, sachant que le système comprend :
- un dispositif (10) destiné à la surveillance du véhicule, sachant que le dispositif (10) est conçu portable et présente une unité d'activation pour activer et désactiver le dispositif (10),
- un poste de surveillance (58), qui peut recevoir les signaux d'avertissement transmis par le dispositif (10) et délivrer des signaux de commande au dispositif (10), et
- une unité de réacheminement (64) pour réacheminer les signaux d'avertissement produits par le dispositif (10),
comprenant les étapes suivantes :
- introduction du dispositif (10) dans un véhicule à surveiller,
- établissement d'une communication entre le dispositif (10) et le poste de surveillance (58) par la réception de signaux d'avertissement et par l'émission de signaux de commande,
- activation du dispositif (10) au moyen des signaux de commande émis par le poste de surveillance,
- surveillance du véhicule,
- désactivation du dispositif (10) au moyen des signaux de commande émis par le poste de surveillance,
- déplacement du dispositif dans un autre véhicule à surveiller.
